(19) Europäisches Patentamt / European Patent Office / Office européen des brevets

(11) **EP 2 857 170 A1**

(12) **EUROPÄISCHE PATENTANMELDUNG**

(43) Veröffentlichungstag:
08.04.2015 Patentblatt 2015/15

(51) Int Cl.:
*B29C 45/73* (2006.01)      *B29C 51/42* (2006.01)

(21) Anmeldenummer: 13005794.6

(22) Anmeldetag: 12.12.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **02.10.2013 DE 102013016453**

(71) Anmelder:
• **Linde Aktiengesellschaft**
**80331 München (DE)**
• **ISK, Iserlohner Kunststoff-Technologie GmbH**
**58638 Iserlohn (DE)**

(72) Erfinder:
• **Heninger, Rolf**
**85635 Höhenkirchen-Siegertsbrunn (DE)**
• **Praller, Andreas**
**82110 Germering (DE)**
• **Orsén, Mikael**
**S-23136 Trelleborg (SE)**
• **Kürten, Andreas**
**58644 Iserlohn (DE)**

(74) Vertreter: **Gellner, Bernd**
**Linde AG**
**Patente und Marken**
**Dr.-Carl-von-Linde-Strasse 6-14**
**82049 Pullach (DE)**

(54) **Verfahren und Vorrichtung zur Herstellung eines Bauteils in einem Formungsprozess und Bauteil**

(57)     Die vorliegende Erfindung betrifft ein Verfahren zur Herstellung eines Bauteils (10) in einem Formungsprozess, bei dem die Temperatur des Bauteils partiell mittels eines Temperierungsmittels (50) verändert wird mit dem Ziel, lokal den Grad der Kristallisation und damit die mechanischen und/ oder optischen Eigenschaften zu beeinflussen, wobei als Temperierungsmittel Gas oder verflüssigtes Gas verwendet wird.

Außerdem betrifft die Erfindung eine Vorrichtung zur Formung eines Bauteils sowie das Bauteil selbst.

fig. 1

EP 2 857 170 A1

**Beschreibung**

Die vorliegende Erfindung betrifft ein Verfahren zur Herstellung eines Bauteils in einem Formungsprozess sowie eine Vorrichtung zur Formung eines Bauteils und demzufolge ebenfalls zur Herstellung des Bauteils in einem Formungsprozess. Des Weiteren betrifft die vorliegende Erfindung ein Bauteil, insbesondere ein solches, welches erfindungsgemäß hergestellt worden ist.

Es sind diverse Verfahren zur Herstellung von Kunststoffbauteilen bekannt, die üblicherweise ur- und/oder umgeformt werden, um aus einem Ausgangsmaterial oder aus einem Rohling die gewünschte Endform zu erreichen. Dabei spielt die Temperatur des verwendeten Polymers eine wesentliche Rolle. Es ist bekannt, dass sich die Temperatur eines flüssigen Polymers sowie auch die Abkühlungsgeschwindigkeit bei kristallinen und semi-kristallinen Kunststoffen auf den jeweiligen Kristallisationsgrad auswirken, was dazu führt, dass sich eine jeweils unterschiedliche Elastizität einstellt. Eine geringere Elastizität wird erzielt, wenn ein höherer Kristallisationsgrad erzeugt wird und eine höhere Elastizität wird erzielt, wenn ein niedrigerer Kristallisationsgrad erzeugt wird. Dies wird unter anderem in Bereichen von Kunststoffbehältern angewendet, in denen ein Gelenk zu realisieren ist. Zwecks Erhöhung der Dauerelastizität im Gelenk-Bereich ist eine beschleunigte Abkühlung des Kunststoffes durchzuführen. Dem gegenüber fördert eine Erwärmung des flüssigen Polymers die Kristallisation und erhöht dadurch die Zugfestigkeit, senkt jedoch die Elastizität.

Wie bereits anhand der Kunststoffbehälter mit Gelenkbereich beschrieben, besteht oftmals die Zielsetzung, Materialeigenschaften von Kunststoffprodukten derart zu verändern, dass sie den jeweiligen mechanischen Beanspruchungen gerecht werden. Zu diesem Zweck wird üblicherweise eine Wasserkühlung in die Kavität eingesetzt, die zur Aufnahme des Ausgangsmaterials dient. Mit der Wasserkühlung ist das herzustellende Bauteil bzw. dessen Ausgangsmaterial gezielt abkühlbar, um die Kristallisation zu beeinflussen. Nachteil einer derartigen Wasserkühlung ist jedoch, dass die dafür benötigte Kühlleitung einen relativ großen Querschnitt aufweisen muss, um einen geeigneten Volumenstrom hindurchlassen zu können. Dies wiederum hat zur Folge, dass die Kühlleitung nicht in jedem Kavitätsbereich angeordnet werden kann, sondern nur dort, wo genügend Raum zur Verfügung steht. Außerdem ist das als Kühlmittel verwendete Wasser in seinem Temperaturbereich begrenzt, so dass auch die Temperierung nur in begrenztem Maße durchführbar ist. Auf Grund dessen ist zur Realisierung einer effizienten Kühlung die Kühlleitung entsprechend dicht an der Werkzeugoberfläche anzuordnen, was jedoch das Risiko birgt, dass es auf Grund von Verschleiß zu Lecks in der Kühlleitung kommen kann. Letztendlich ist mit der Wasserkühlung lediglich eine Temperaturminderung im Bauteil realisierbar. Zur Erhöhung der Temperatur, zum Beispiel zur Steigerung der Zugfestigkeit, ist demzufolge ein zusätzliches Temperiersystem, wie zum Beispiel eine keramische oder induktive Heizung anzuordnen.

Aus der DE 199 18 428 C1 ist ein Verfahren zur Kühlung von Werkzeugen mit Kohlenstoffdioxid bekannt, bei dem die Temperatur in einem Werkzeug gezielt beeinflusst wird, um die Temperatur eines das Werkzeug kontaktierenden Werkstückes zu vergleichmäßigen.

Der vorliegenden Erfindung liegt die Aufgabe zugrunde, ein Verfahren, sowie eine Vorrichtung zur Verfügung zu stellen, mit denen in einfacher, effizienter und kostengünstiger Weise gewünschte mechanische Eigenschaften im damit hergestellten Bauteil erzielbar sind. Ergänzt wird die Aufgabe durch den Aspekt der Realisierung eines dementsprechenden Bauteils.

Zur Lösung dieser Aufgabe wird ein Verfahren zur Herstellung eines Bauteils in einem Formungsprozess zur Verfügung gestellt, bei dem die Temperatur des Bauteils partiell mittels eines Temperierungsmittels verändert wird. Dies dient insbesondere dafür, lokal den Grad der Kristallisation und damit die mechanischen und/ oder optischen Eigenschaften zu beeinflussen. Es erfindungsgemäß vorgesehen, dass als Temperierungsmittel Gas oder verflüssigtes Gas verwendet wird. Die Temperaturänderung bezieht sich dabei auf eine Ausgangstemperatur des Bauteils bzw. seines Ausgangsmaterials. Durch die angepasste Prozessführung können die Morphologie und somit die MaterialEigenschaften der herzustellenden Bauteile gezielt optimiert werden. Das erfindungsgemäße Verfahren hat den Vorteil, dass es nicht den durch die Wasserkühlung gegebenen Restriktionen wie dem relativ großen Bauraum, dem geringen Abstand zur Werkzeugoberfläche und dem relativ geringen Temperaturbereich unterworfen ist. Zudem ist zwecks Temperaturerhöhung nicht mehr zwingend eine extra Erwärmungseinrichtung in Form von Keramiken oder induktiven Heizungen notwendig.

Dies schließt jedoch nicht aus, dass neben der erfindungsgemäß vorgesehenen Temperierung mittels Gas oder verflüssigtem Gas noch eine Kühlung mittels Wasser bzw. Erwärmung mittels Keramiken oder induktiven Heizungen erfolgt.

Vorzugsweise wird als Temperierungsmittel Kohlenstoffdioxid als Gas oder auch in verflüssigter Form eingesetzt.

Es ist vorgesehen, dass die Temperierung des Bauteils lediglich partiell; d.h. bereichsweise erfolgt. Das heißt, dass die Temperaturminderung bzw. Temperaturerhöhung des Bauteils lediglich auf bestimmte spezifische Bereiche des Bauteils eingeschränkt ist.

Zur effizienten Durchführung des Verfahrens ist vorgesehen, dass die Formung des Bauteils in einem Werkzeug erfolgt und die Temperierung des Bauteils indirekt über eine Temperierung des Werkzeugs bzw. eines Werkzeugeinsatzes vorgenommen wird.

Das Werkzeug ist in diesem Fall eine Form bzw. Kavität, in welche ein Halbzeug bzw. eine urzuformende Masse eingebracht wird. Alternativ oder auch hinzukommend kann das Verfahren derart durchgeführt werden, dass das Bauteil zumindest bereichsweise direkt mit einem Kohlenstoffdioxid-Volumenstrom beaufschlagt wird.

Wie bereits erwähnt kann die Temperatur des Bauteils gemindert oder auch erhöht werden. Durch eine Temperaturminderung bzw. Kühlung, die zum Beispiel mittels Entspannung flüssigen Kohlenstoffdioxids realisierbar ist, lässt sich die Elastizität des Bauteilmaterials steigern. Durch die Erwärmung des Bauteilmaterials mittels Zuführung gasförmigen Kohlenstoffdioxids, das vorher mit einer externen Wärmequelle erwärmt wurde, lässt sich die Elastizität im temperierten Bereich mindern und somit eine besonders harte Struktur erzeugen. Daneben lässt sich auch die Zugfestigkeit im Bauteilmaterial erhöhen. Die Kühlung und Erwärmung lässt sich dabei miteinander kombinieren, nämlich zum Beispiel derart, dass nach erfolgter Kristallisation des Kunststoffmaterials aufgrund dessen Temperatur-Erhöhung anschließend oder relativ kurze Zeit danach mittels Kohlenstoffdioxid das Bauteilmaterial abgekühlt wird, um die Zykluszeit zu verringern.

Als Formungsprozess kann ein Urformen oder auch ein Umformen durchgeführt werden, wobei diese beiden Formungsverfahren auch kombiniert nacheinander ablaufen können, indem zuerst ein Urformen stattfindet und anschließend das noch plastifizierbare Material des Urformungsprozesses einem Umformungsprozess unterzogen wird. Ein übliches Urform-Verfahren ist dabei das Spritzgießen. Als Umformverfahren bieten sich insbesondere das Tiefziehen von Halbzeugen, wie zum Beispiel von als Faserverbundwerkstoffe ausgeführt in sogenannten Organoblechen, als auch das Extrusionsverfahren zur Herstellung von Profilen sowie das Blasformen, zum Beispiel zur Herstellung von Kunststoffflaschen, an. Beim Tiefziehen werden die Halbzeuge erwärmt und sodann mit einer Tiefzieh-Kraft bzw. einem Tiefzieh-Druck beaufschlagt. Nach erfolgter Formgebung können die dadurch hergestellten Bauteile mittels Kohlenstoffdioxid erwärmt und/oder beschleunigt abgekühlt werden. Bei der Extrusion zur Herstellung von Profilen kann Kohlenstoffdioxid über Werkzeugeinsätze oder auch direkt nach Herausnahme aus dem Werkzeug in seiner Morphologie beeinflusst werden. Beim Blasformen zur Herstellung von Kunststoffflaschen kann der hergestellte Rohling im aufgeblasenen Zustand ebenfalls erhitzt oder auch abgekühlt werden. Die genannten Temperierungen lassen sich dabei am gesamten hergestellten Bauteil bzw. Rohling ausführen oder auch nur an Segmenten.

Insbesondere kann vorgesehen sein, dass das Bauteil in mehreren entlang einer ersten Koordinatenrichtung angeordneten Segmenten temperiert wird. Diese Segmente entsprechen mehreren Schichten und verlaufen parallel zueinander an unterschiedlichen Koordinatenwertbereichen in der ersten Koordinatenrichtung. Die Segmente bzw. Schichten können dabei auch zueinander benachbart sein, wobei dann gegebenenfalls ein erstes Segment anders temperiert wird als das ihm benachbarte Segment, um jeweils unterschiedliche Elastizitätsmodule und/oder Zugfestigkeiten in den einzelnen Segmenten zu realisieren. Diese Ausgestaltungsvariante des Verfahrens kann insbesondere derart ausgeführt werden, dass das Bauteil gleichzeitig in mehreren, entlang einer zweiten Koordinatenrichtung angeordneten Segmenten temperiert wird, wobei die Temperierung in Segmenten der ersten Koordinatenrichtung in mehr Segmenten erfolgt als die Temperierung in Segmenten der zweiten Koordinatenrichtung. Insbesondere können solche entlang einer zweiten Koordinatenrichtung angeordneten Segmente Randzonen sein, die die ersten Segmente in Richtung der zweiten Koordinatenrichtung begrenzen.

Die zweite Koordinatenrichtung verläuft dabei im Wesentlichen senkrecht zur ersten Koordinatenrichtung.

Zwecks ausreichender Einstellung der gewünschten Materialeigenschaften ist vorteilhafterweise vorgesehen, dass bei einer Temperierung des Bauteils in einem Segment die Temperierung des Materials des Bauteils in diesem Segment mit einem Anteil von wenigstens 50% der Querschnittsfläche in diesem Segment erfolgt. Der Querschnitt bzw. die Querschnittsfläche verläuft dabei in der Ebene der Erstreckung des Segments und somit in Richtung der Koordinatenrichtung, in der sich das Segment hauptsächlich erstreckt. Vorzugsweise sollten 50-90% der Querschnittsfläche, insbesondere 60-80% der Querschnittsfläche, der Temperierung unterzogen werden. Das heißt, dass bei einem Segment im Koordinatenwertebereich in der ersten Koordinatenrichtung nicht zwingend das Material des gesamten Querschnittes des Bauteils einer Temperierung zu unterziehen ist, sondern zum Beispiel bei einem im Wesentlichen zweidimensional ausgestalteten Bauteil in einem Segment nur ein mittiger Bereich besonders temperiert wird und dieser mittige Bereich von zwei Randbereichen begrenzt ist, der keiner extra Temperierung unterzogen ist.

Bei Verarbeitung von Kunststoff als Material für das Bauteil lässt sich eine höhere Elastizität des Bauteils bzw. des jeweils temperierten Bauteilbereiches erzielen, wenn der Kunststoff beim Formungsprozess oder innerhalb kürzester Zeit nach dem Formungsprozess abgekühlt wird. Umgekehrt wirkt sich eine Erwärmung elastizitätsverringernd aus, stellt jedoch eine höhere Zugfestigkeit ein.

Durch die beschriebene Temperierung in Segmenten, die entlang einer ersten Koordinatenrichtung angeordnet sind, wird erreicht, dass in dieser ersten Koordinatenrichtung mehrere Segmente veränderter Elastizität angeordnet sind. Bei der vorzugsweise vorgesehenen Temperierung von weniger Segmenten, die entlang der zweiten Koordinatenrichtung angeordnet sind, wird beispielsweise erreicht, dass somit in der zweiten Koordinatenrichtung weniger Segmente mit erhöhter Elastizität angeordnet sind als in der ersten Koordinatenrichtung. Es kann dabei das Verfahren derart ausgestaltet sein, das in der zweiten Koordinatenrichtung gar keine Segmente einer Temperierung unterzogen werden und somit entlang dieser zweiten Koordinatenrichtung auch keine Bereiche erhöhter Elastizität vorhanden sind. Durch die unterschiedlichen Elastizitäten in den einzelnen Segmenten erhalten Diese unterschiedliche Federkonstanten in der ersten Koordinatenrichtung, wobei diese Segmente unterschiedlicher Federrate in der ersten Koordinatenrichtung in Reihe angeordnet sind. In der zweiten Koordinatenrichtung sind diese Segmente dagegen parallel angeordnet, so dass sich in der zweiten Koordinatenrichtung ein Federpaket mit parallel angeordneten Federn ausbildet. Die Gesamt-Federrate des Bauteils in der zweiten Koordinatenrichtung Rgy berechnet sich aus den Federraten Ryi der in der zweiten Koordinatenrichtung angeordneten Segmente sowie der dazwischen angeordneten Bereiche folgendermaßen:

$$Rgy = \sum_{i=1}^{N} Ryi$$

Die Gesamt-Federrate des Bauteils in der ersten Koordinatenrichtung Rgx berechnet sich aus den Einzel-Federraten Rxi der Segmente und Zwischenbereiche in der ersten Koordinatenrichtung folgendermaßen:

$$\frac{1}{Rgx} = \sum_{i=1}^{N} \frac{1}{Rxi}$$

Die Gesamt-Federrate in der ersten Koordinatenrichtung ist somit wesentlich kleiner als die Gesamt-Federrate in der zweiten Koordinatenrichtung. Das bedeutet, dass das Bauteil in der ersten Koordinatenrichtung wesentlich elastischer ist als in der zweiten Koordinatenrichtung.

Zur Lösung der Aufgabe wird außerdem eine Vorrichtung zur Formung eines Bauteils zur Verfügung gestellt, welches eine Aufnahmeeinheit zur Aufnahme eines ur- bzw. umzuformenden Bauteilmaterials sowie eine Zuführeinrichtung zur Zuführung von Kohlenstoffdioxid in die Aufnahmeeinheit zwecks Temperierung des Bauteilmaterials aufweist. Die Aufnahmeeinheit ist dabei bei Durchführung eines Urformprozesses eine Kavität zur Aufnahme des flüssigen bzw. des pastösen Materials und beim Umformprozess ein entsprechendes Werkzeug, mit dem der Rohling umgeformt werden kann. Die Zuführeinrichtung zur Zuführung von Kohlenstoffdioxid ist derart ausgestaltet, dass mit ihr vorzugsweise warmes und/ oder kaltes Kohlenstoffdioxid transportierbar und eingebbar ist. In günstiger Ausgestaltung umfasst die Zuführeinrichtung ein Kohlenstoffdioxid-Reservoir. Dabei ist die erfindungsgemäße Vorrichtung nicht auf die Zuführung von Kohlenstoffdioxid zwecks Temperierung eingeschränkt, sondern sie kann zusätzlich noch eine Wasserkühlung bzw. auch eine keramische oder induktive Heizung aufweisen.

Die Vorrichtung umfasst des Weiteren vorteilhafterweise einen Werkzeugeinsatz, der von Kohlenstoffdioxid durchströmbar oder durchströmt ist. Ein solcher Werkzeugeinsatz kann in einfacher Weise ausgetauscht werden. Wenigstens eine Wand oder auch ein Wandbereich des Werkzeugeinsatzes bildet dabei eine Anlagefläche zur Anlage des Bauteilmaterials aus, so dass effizient eine Temperierung über diese Fläche erfolgen kann. Derartige Werkzeugeinsätze lassen sich individuell dimensionieren und somit die Temperierung auf räumlich sehr enge Räume beschränken. Die Werkzeugeinsätze sollten vorzugsweise derart ausgeführt sein, dass sie geeignet sind, sehr kaltes oder auch stark erhitztes Kohlenstoffdioxid aufzunehmen bzw. zu transportieren, um dementsprechend das Bauteil effizient abzukühlen bzw. zu erwärmen.

In einer komfortablen Ausgestaltung der erfindungsgemäßen Vorrichtung ist vorgesehen, dass deren Zuführeinrichtung derart ausgestaltet ist, dass Segmente des Bauteilmaterials in der Aufnahmeeinheit jeweils unterschiedlich temperierbar sind. So kann zum Beispiel ein Segment gezielt abgekühlt werden und ein parallel dazu angeordnetes Segment gezielt erwärmt werden, um die jeweils gewünschten Eigenschaften im Bauteil zu erzeugen.

Zur Temperierung des Bauteils wird erwärmtes oder abgekühltes Kohlenstoffdioxid durch Strömungskanäle in der Vorrichtung bzw. in deren Werkzeugeinsätze geleitet, so dass Wärme vom Kohlenstoffdioxid auf das Bauteil übertragbar ist oder umgekehrt Wärme vom Bauteil auf das Kohlenstoffdioxid übertragbar ist.

Die Erfindung ergänzend wird außerdem ein Bauteil, insbesondere ein Kunststoffbauteil eines Kraftfahrzeuges zur Verfügung gestellt, welches Segmente aufweist, in denen das Bauteilmaterial unterschiedliche Elastizität und/oder eine unterschiedliche Zugfestigkeit aufweist. Insbesondere ist dieses Bauteil ein erfindungsgemäß hergestelltes, vorzugsweise spritzgegossenes Bauteil. Dieses Bauteil kann zum Beispiel ein wesentlicher Bestandteil eines PKW-Stoßfängers sein, welcher generell ein relativ geringes Elastizitätsmodul und eine hohe Zugfestigkeit haben soll. Weiterhin kann es verhältnismäßig kleine Bereiche aufweisen, zum Beispiel eine Kante, die relativ weich ausgeführt ist, das heißt mit relativ großer Elastizität und ggf. mit geringer Zugfestigkeit ausgestaltet ist, um beim Anstoßen Verletzungen und/oder Beschädigungen des angestoßenen Körpers sowie auch des Stoßfängers zu verhindern oder zumindest zu verringern. Als Bauteil-Material bietet sich dabei ein Polymer an bzw. ein kristalliner oder semi-kristalliner Kunststoff.

Die Segmente unterschiedlicher Temperatur haben vorzugsweise eine Fläche von weniger als 100 $cm^2$. Insbesondere sollten diese Segmente eine Fläche

von 0,5 cm$^2$ bis 100 cm$^2$ aufweisen.

Dabei ist das erfindungsgemäße Bauteil nicht lediglich darauf eingeschränkt, dass es Bereiche unterschiedlicher Elastizität aufweist, sondern diese Bereiche und/oder andere Bereiche können mit erfindungsgemäß eingestellter erhöhter Zugfestigkeit ausgestaltet sein.

Über die gezielte und lokal beschränkte Erhitzung oder Kühlung mit Kohlendioxid lassen sich auch die Schwindungseigenschaften von Polymeren optimieren, so dass die Maßhaltigkeit der Produkte verbessert wird. Ebenso lassen sich die optischen Eigenschaften dadurch sehr positiv beeinflussen.

Die vorliegende Erfindung wird im Folgenden anhand der in den beiliegenden Zeichnungen dargestellten Ausführungsbeispiele erläutert.

Es zeigt:

Fig.1 eine erfindungsgemäße Vorrichtung in schematischer Ansicht mit darin befindlichem Bauteil,

Fig.2 ein erfindungsgemäß hergestelltes Bauteil.

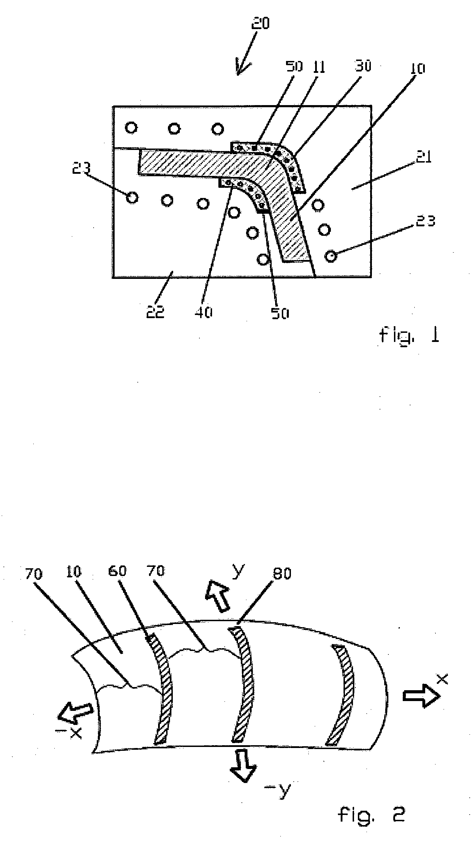

Die erfindungsgemäße Vorrichtung zur Durchführung des erfindungsgemäßen Verfahrens, wird anhand der in Figur 1 dargestellten Spritzgussform erläutert. Das heißt, dass das in Figur 1 dargestellte Bauteil ein Spritzgussteil ist.

In Fig.1 ist ein Zustand gezeigt, in dem das Material des herzustellenden Spritzgussteils 10 bereits vollständig in der Vorrichtung 20, welche eine entsprechende Kavität zur Aufnahme des spritzzugießenden Materials aufweist, aufgenommen ist. Die Vorrichtung 20 umfasst eine erste Formhälfte 21 sowie eine zweite Formhälfte 22, wobei die erwähnte Kavität lediglich in die zweite Formhälfte 22 eingearbeitet ist und somit im Wesentlichen die Negativform des Spritzgussteils 10 ausbildet. Die Vorrichtung 20 ist somit die Aufnahmeeinheit zur Aufnahme eines ur- und/ oder umzuformenden Bauteilmaterials. Flüssiger oder auch pastöser Kunststoff wird in die zwischen der ersten Formhälfte 21 und der zweiten Formhälfte 22 ausgebildete Kavität eingebracht und erstarrt dort. Nach Erstarrung des Spritzgussteils 10 werden die Formhälften 21, 22 voneinander entfernt, so dass das Spritzgussteil 10 der Vorrichtung 20 entnommen werden kann.

Eine Seite des herzustellenden Spritzgussteils 10 bzw. dessen Spritzgussmaterials wird durch die erste Formhälfte 21 begrenzt. In der Vorrichtung 20 ist ein erster Temperiereinsatz 30 sowie ein zweiter Temperiereinsatz 40 angeordnet, wobei diese beiden Temperiereinsätze 30, 40 beispielhaft an der Innen- und Außenseite eines gerundeten Bereiches 11 des Spritzgussteils 10 angeordnet sind. In den Temperiereinsätzen 30, 40 sind wenigstens ein Kohlenstoffdioxidkanal 50 und bevorzugt mehrere derartiger Kohlenstoffdioxidkanäle 50 angeordnet, um durch Diese temperiertes Kohlenstoffdioxid strömen zu lassen. Die Temperiereinsätze 30,40 und die Kohlenstoffdioxidkanäle 50 sind Bestandteile einer Zuführeinrichtung zur Zuführung von Kohlenstoffdioxid.

Im Fall der Durchströmung der Kohlenstoffdioxidkanäle 50 mit erwärmtem Kohlenstoffdioxid wird die Wärme vom Kohlenstoffdioxid auf den jeweiligen Temperiereinsatz 30, 40 übertragen und von dem wiederum mittels Wärmeleitung auf das Material des Spritzgussteils 10 übertragen. Bei der Durchströmung der Kohlenstoffdioxidkanäle 50 mit Kohlenstoffdioxid sehr geringer Temperatur wird wiederum Wärme vom Material des Spritzgussteils 10 auf den jeweiligen Temperiereinsatz 30, 40 übertragen und von Diesem wiederum auf das Kohlenstoffdioxid im Kohlenstoffdioxidkanal 50. Durch die Durchströmung der Kohlenstoffdioxidkanäle 50 mit Kohlenstoffdioxid lässt sich somit in einfacher Weise dem Spritzgussteil 10 Wärme zuführen oder auch Wärme vom Spritzgussteil 10 ableiten.

Beispielhaft weist die erfindungsgemäße Vorrichtung 20 zusätzlich Wasserkanäle 23 auf, um, ebenfalls über Wärmeleitung, Wärme aus dem Spritzgussteil 10 über die jeweilige Formhälfte 21, 22 in das Wasser im Wasserkanal 23 ableiten zu können und das Spritzgussteil 10 in entsprechender Weise kühlen zu können. Es ist hier ersichtlich, dass die Wasserkanäle 23 nicht derart dicht an der Oberfläche des Spritzgussteils 10 angeordnet werden können wie die Kohlenstoffdioxidkanäle 50 in den Temperiereinsätzen 30, 40.

Des Weiteren kann die dargestellte Vorrichtung 20 mit hier nicht gezeigten Erwärmungseinrichtungen ausgestattet sein.

In Fig.2 ist ein erfindungsgemäß hergestelltes Bauteil, hier ein Spritzgussteil 10, dargestellt, wobei x eine erste Koordinatenrichtung ist und y im unbelasteten Zustand des Spritzgussteils 10 eine zweite Koordinatenrichtung ist, die im Wesentlichen senkrecht zur ersten Koordinatenrichtung X verläuft. Im Spritzgussteil 10 sind Segmente 60 ausgebildet, die voneinander beabstandet sind und im Wesentlichen parallel verlaufen. Mehrere Segmente 60 sind entlang der ersten Koordinatenrichtung x zueinander beabstandet. Die Längserstreckungsrichtung eines jeden Segments 60 verläuft in der zweiten Koordinatenrichtung.

Diese Segmente 60 sind somit durch Zwischenbereiche 70 voneinander getrennt und weisen in Bezug zu den Zwischenbereichen 70 unterschiedliche Materialeigenschaften, wie zum Beispiel andere Elastizitätsmodule und/oder Zugfestigkeiten auf. Dabei müssen die einzelnen Segmente 60 nicht zwingend gleiche Materialeigenschaften aufweisen, sondern sie können auch jeweils unterschiedliche Materialeigenschaften haben. Das Spritzgussteil 10 kann dabei wie dargestellt derart ausgestaltet sein, dass sich die Segmente 60 nicht vollständig entlang der zweiten Koordinatenrichtung Y erstrecken, sondern dass in dieser Koordinatenrichtung Randzonen 80 ausgebildet sind, die im Wesentlichen die gleichen Materialeigenschaften haben wie die Zwischenbereiche 70 zwischen den Segmenten 60.

Zur weiteren Erläuterung der Erfindung wird die Annahme getroffen, dass die dargestellten Segmente 60 jeweils eine Elastizität aufweisen, die größer ist als die der in der ersten Koordinatenrichtung x daneben angeordneten Zwischenbereiche 70. Dadurch ergibt sich, dass bei Belastung des Spritzgussteils 10 in der ersten Koordinatenrichtung x das Spritzgussteil 10 in dieser Richtung hintereinander geschaltete Bereiche unterschiedlicher Elastizität aufweist, so dass dadurch eine Gesamt-Federrate Rgx des Spritzgussteils 10 in der ersten Koordinatenrichtung x ausgebildet ist, die sich folgendermaßen berechnet:

$$\frac{1}{Rgx} = \sum_{i=1}^{N} \frac{1}{Rxi}$$

Dabei gibt Rxi die Federrate eines jeweiligen Segmentes 60 bzw. eines jeweiligen Zwischenbereiches 70 in der ersten Koordinatenrichtung x an.

In der zweiten Koordinatenrichtung y sind jedoch die einzelnen Bereiche, die durch die Segmente 60 und die Zwischenbereiche 70 ausgebildet sind, parallel geschaltet, so dass sich die Gesamt-Federrate in der zweiten Koordinatenrichtung Rgy folgendermaßen berechnet:

$$Rgy = \sum_{i=1}^{N} Ryi$$

Dabei gibt Ryi die Federrate eines jeweiligen Segmentes 60 bzw. eines jeweiligen Zwischenbereiches 70 in der zweiten Koordinatenrichtung x an.

Es ist erkennbar, dass somit die Elastizität des Spritzgussteils 10 in der ersten Koordinatenrichtung x wesentlich größer ist als in der zweiten Koordinatenrichtung y. Dieser Vorteil lässt sich insbesondere bei Bauteilen nutzen, die in verschiedenen Richtungen unterschiedliche Materialeigenschaften, wie zum Beispiel unterschiedliche Elastizität oder auch Zugfestigkeit aufweisen sollen.

Es lässt sich somit statt eines sonst üblicherweise erzielbaren unidirektionalen Materialverhaltens ein richtungsabhängiges Materialverhalten erzeugen. Die in Figur 2 dargestellten Segmente 60 können zum Beispiel mittels beschleunigter Abkühlung geschaffen werden, so dass in diesen Bereichen weniger Kristallisation im Material des Spritzgussteils 10 auftritt. Der Kunststoff bleibt in diesen Bereichen elastischer.

## Patentansprüche

1. Verfahren zur Herstellung eines Bauteils in einem Formungsprozess, bei dem die Temperatur des Bauteils partiell mittels eines Temperierungsmittels verändert wird mit dem Ziel, lokal den Grad der Kristallisation und damit die mechanischen und/ oder optischen Eigenschaften zu beeinflussen, **dadurch gekennzeichnet, dass** als Temperierungsmittel Gas oder verflüssigtes Gas verwendet wird.

2. Verfahren zur Herstellung eines Bauteils in einem Formungsprozess nach Anspruch 1, **dadurch gekennzeichnet, dass** das Gas Kohlenstoffdioxid ist.

3. Verfahren zur Herstellung eines Bauteils in einem Formungsprozess nach einem der Ansprüche 1 und 2, **dadurch gekennzeichnet, dass** die Formung des Bauteils in einem Werkzeug erfolgt und die Temperierung des Bauteils indirekt über eine Temperierung des Werkzeugs vorgenommen wird.

4. Verfahren zur Herstellung eines Bauteils in einem Formungsprozess nach einem der vorhergehenden Ansprüche, **dadurch gekennzeichnet, dass** die Temperatur des Bauteils

   a) gemindert oder
   b) erhöht

wird.

5. Verfahren zur Herstellung eines Bauteils in einem Formungsprozess nach einem der vorhergehenden Ansprüche, **dadurch gekennzeichnet, dass** der Formungsprozess ein

   a) Urformen oder
   b) ein Umformen

ist.

6. Verfahren zur Herstellung eines Bauteils in einem Formungsprozess nach einem der Ansprüche 2 bis 5, **dadurch gekennzeichnet, dass** das Bauteil in mehreren, entlang einer ersten Koordinatenrichtung (x) angeordneten Segmenten (60) temperiert wird.

7. Verfahren zur Herstellung eines Bauteils in einem Formungsprozess nach Anspruch 6, **dadurch gekennzeichnet, dass** bei einer Temperierung des Bauteils in einem Segment (60) die Temperierung des Materials des Bauteils in diesem Segment (60) mit einem Anteil von wenigstens 50% der Querschnittsfläche in diesem Segment (60) erfolgt.

8. Vorrichtung zur Formung eines Bauteils, umfassend eine Aufnahmeeinheit zur Aufnahme eines ur- und/ oder umzuformenden Bauteilmaterials sowie eine Zuführeinrichtung zur Zuführung von Kohlenstoffdioxid in die Aufnahmeeinheit zwecks Temperierung des Bauteilmaterials.

9.  Vorrichtung zur Formung eines Bauteils nach Anspruch 8, **dadurch gekennzeichnet, dass** die Zuführeinrichtung derart ausgestaltet ist, dass Segmente (60) des Bauteilmaterials in der Aufnahmeeinheit unterschiedlich temperierbar sind.

10. Bauteil, insbesondere Kunststoffbauteil eines Kraftfahrzeuges, mit Segmenten (60) von Bauteilmaterial unterschiedlicher Elastizität und/ oder Zugfestigkeit.

fig. 1

fig. 2

Europäisches
Patentamt

European
Patent Office

Office européen
des brevets

**EUROPÄISCHER RECHERCHENBERICHT**

Nummer der Anmeldung

EP 13 00 5794

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 205 063 A (CLARKE R & CO LTD) 30. November 1988 (1988-11-30) * Seite 5, Zeile 28 - Zeile 32; Ansprüche; Abbildungen * ----- | 1-7,10 | INV. B29C45/73 B29C51/42 |
| X | US 2006/159797 A1 (LEE ROBERT A [GB] ET AL) 20. Juli 2006 (2006-07-20) * Absätze [0006] - [0008], [0219] - [0222], [0226]; Abbildung 21B * ----- | 1-10 | |
| X | US 2007/108668 A1 (HUTCHINSON GERALD A [US] ET AL) 17. Mai 2007 (2007-05-17) * Absätze [0215], [0216], [0262]; Abbildungen 10,16 * ----- | 1-10 | |
| X | EP 1 772 251 A1 (TOYO SEIKAN KAISHA LTD [JP]) 11. April 2007 (2007-04-11) * Absätze [0043], [0048], [0051]; Abbildungen * ----- | 1-10 | |
| X | US 2011/059201 A1 (JONG OH YEONG [KR] ET AL OH YEONG-JONG [KR] ET AL) 10. März 2011 (2011-03-10) * Absatz [16.43]; Ansprüche; Abbildung 7 * ----- | 8-10 | RECHERCHIERTE SACHGEBIETE (IPC) B29C B29K B29L |
| X | DE 10 2008 000452 A1 (STEMKE GUDRUN [DE]) 3. September 2009 (2009-09-03) * Zusammenfassung; Abbildungen * ----- | 8-10 | |
| X | WO 96/35563 A1 (AGA AKTIEBOLAG PUBL [SE]; LARSSON OWE [SE]) 14. November 1996 (1996-11-14) * Seite 3, Zeile 7 - Zeile 38; Abbildungen * ----- -/-- | 8-10 | |

Der vorliegende Recherchenbericht wurde für alle Patentansprüche erstellt

| Recherchenort | Abschlußdatum der Recherche | Prüfer |
|---|---|---|
| München | 13. Mai 2014 | Kopp, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................................
& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

**Nummer der Anmeldung**

EP 13 00 5794

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 065 036 A2 (HEKUMA HERBST MASCHB GMBH [DE] HEKUMA GMBH [DE]) 3. Januar 2001 (2001-01-03) * Zusammenfassung; Abbildungen * * Absatz [0037] * ----- | 8-10 | |
| X | EP 2 433 776 A1 (LINDE AG [DE]; ISK GMBH [DE]) 28. März 2012 (2012-03-28) * Absätze [0006], [0044] - [0046]; Ansprüche; Abbildungen * ----- | 8-10 | |
| X | US 6 423 263 B1 (KOIZUMI JUNJI [JP] ET AL) 23. Juli 2002 (2002-07-23) * Zusammenfassung; Abbildungen * * Spalte 1, Zeile 10 - Zeile 33 * * Spalte 3, Zeile 31 - Zeile 42 * ----- | 10 | |
| X | EP 1 342 623 A1 (BEKAERT SA NV [BE]; POLYNORM PLASTICS BV [NL]) 10. September 2003 (2003-09-10) * Zusammenfassung; Abbildungen * ----- | 10 | **RECHERCHIERTE SACHGEBIETE (IPC)** |
| X | DE 195 46 685 A1 (VOLKSWAGEN AG [DE]) 12. September 1996 (1996-09-12) * Abbildungen * ----- | 10 | |

Der vorliegende Recherchenbericht wurde für alle Patentansprüche erstellt

| Recherchenort | Abschlußdatum der Recherche | Prüfer |
|---|---|---|
| München | 13. Mai 2014 | Kopp, Christian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 13 00 5794

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-05-2014

| Im Recherchenbericht angeführtes Patentdokument | Datum der Veröffentlichung | Mitglied(er) der Patentfamilie | Datum der Veröffentlichung |
|---|---|---|---|
| GB 2205063 A | 30-11-1988 | AU 1784188 A<br>GB 2205063 A<br>WO 8809298 A1 | 21-12-1988<br>30-11-1988<br>01-12-1988 |
| US 2006159797 A1 | 20-07-2006 | US 2006159797 A1<br>WO 2006047429 A1 | 20-07-2006<br>04-05-2006 |
| US 2007108668 A1 | 17-05-2007 | CA 2617591 A1<br>EP 1943074 A1<br>US 2007108668 A1<br>WO 2007027606 A1 | 08-03-2007<br>16-07-2008<br>17-05-2007<br>08-03-2007 |
| EP 1772251 A1 | 11-04-2007 | CN 101027177 A<br>EP 1772251 A1<br>KR 20070053228 A<br>US 2007290415 A1<br>WO 2006011612 A1 | 29-08-2007<br>11-04-2007<br>23-05-2007<br>20-12-2007<br>02-02-2006 |
| US 2011059201 A1 | 10-03-2011 | KR 20110026279 A<br>US 2011059201 A1 | 15-03-2011<br>10-03-2011 |
| DE 102008000452 A1 | 03-09-2009 | AT 531497 T<br>CA 2716902 A1<br>CN 101959661 A<br>DE 102008000452 A1<br>EP 2282880 A1<br>KR 20100126756 A<br>PT 2282880 E<br>US 2011005729 A1<br>WO 2009106601 A1 | 15-11-2011<br>03-09-2009<br>26-01-2011<br>03-09-2009<br>16-02-2011<br>02-12-2010<br>03-02-2012<br>13-01-2011<br>03-09-2009 |
| WO 9635563 A1 | 14-11-1996 | AU 5709496 A<br>SE 9501721 A<br>WO 9635563 A1 | 29-11-1996<br>10-11-1996<br>14-11-1996 |
| EP 1065036 A2 | 03-01-2001 | EP 1065036 A2<br>JP 2001018274 A | 03-01-2001<br>23-01-2001 |
| EP 2433776 A1 | 28-03-2012 | DE 102010046736 A1<br>EP 2433776 A1 | 29-03-2012<br>28-03-2012 |
| US 6423263 B1 | 23-07-2002 | KEINE | |
| EP 1342623 A1 | 10-09-2003 | AT 359197 T<br>AU 2003219138 A1<br>CN 1642781 A | 15-05-2007<br>22-09-2003<br>20-07-2005 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT
## ÜBER DIE EUROPÄISCHE PATENTANMELDUNG NR.

EP 13 00 5794

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-05-2014

| Im Recherchenbericht angeführtes Patentdokument | Datum der Veröffentlichung | Mitglied(er) der Patentfamilie | | Datum der Veröffentlichung |
|---|---|---|---|---|
| | | DE | 60313144 T2 | 03-01-2008 |
| | | EP | 1342623 A1 | 10-09-2003 |
| | | EP | 1483137 A1 | 08-12-2004 |
| | | JP | 4700913 B2 | 15-06-2011 |
| | | JP | 2005519252 A | 30-06-2005 |
| | | US | 2003184099 A1 | 02-10-2003 |
| | | US | 2005023847 A1 | 03-02-2005 |
| | | US | 2006112560 A1 | 01-06-2006 |
| | | WO | 03076234 A1 | 18-09-2003 |
| DE 19546685 A1 | 12-09-1996 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19918428 C1